# EUROPÄISCHE PATENTSCHRIFT

(11) **EP 1 751 436 B1**
(45) Veröffentlichungstag und Bekanntmachung des Hinweises auf die Patenterteilung: **24.10.2007**
(21) Anmeldenummer: 06753403.2
(22) Anmeldetag: 21.04.2006
(51) Int. Cl.: F16B 25/00, F16B 33/02

(54) **HOLZ- UND KUNSTSTOFFSCHRAUBE**
WOODEN AND PLASTIC SCREW
VIS EN BOIS ET EN MATIERE PLASTIQUE

(30) Priorität: 22.04.2005 DE 202005006493 U
(43) Veröffentlichungstag der Anmeldung: 14.02.2007
(73) Patentinhaber: Berner GmbH, 74653 Künzelsau (DE)
(72) Erfinder: RUNGE, Erich, 74653 Künzelsau (DE); LÖFFLER, Ralf, 74677 Dörzbach (DE)
(74) Vertreter: Kitzhofer, Thomas
(86) Internationale Anmeldenummer: PCT/EP2006/003710
(87) Internationale Veröffentlichungsnummer: WO 2006/111412

(56) Entgegenhaltungen:
- EP-A- 0 504 782
- DE-A1- 19 541 839
- DE-U1- 29 811 536
- US-A1- 2002 183 751

## Beschreibung

Die Erfindung betrifft eine Holz- und Kunststoffschraube.

Holzschrauben, darunter zählen auch Spanplattenschrauben, sollen sich möglichst leicht und schnell in das Werkstück einschrauben lassen und dabei trotzdem eine hohe Auszugsfestigkeit besitzen. Kunststoffschrauben werden in Dübel eingedreht und sollen im Dübel für eine hohe Verpressung und damit für eine hohe Auszugsfestigkeit des Dübels sorgen.

Aus der EP 0 504 782 B1 ist eine Schraube bekannt, bei der das Schraubengewinde im Bereich der Schraubenspitze weniger asymmetrisch bis symmetrisch verglichen mit dem Schaftbereich ist. Diese Schraube soll sich durch einen geringeren Eindrehwiderstand, eine großes Überdrehmoment sowie gute Auszugswerte auszeichnen.

Das Dokument DE 29 811 536 U, wird als nächstliegender stand der Technik angesehen. DE 29 811 536 U offenbart eine Schraube mit dem Merkmalen des Oberbegriffs des Anspruchs 1.

Die Erfindung schafft eine Holz- und Kunststoffschraube, die ebenfalls sehr gut in das Holz und in Dübel eindrehbar ist und gute Auszugswerte besitzt. Die erfindungsgemäße Schraube ist darüber hinaus auch relativ einfach herstellbar.

Dies wird erfindungsgemäß durch eine Holz- oder Kunststoffschraube erreicht, mit einem Kopf, einem im wesentlichen zylindrischen Schaft, einer Spitze und einem sich über den Schaft bis in den Spitzenbereich erstreckenden Gewinde, das eine spitzenseitige und eine kopfseitige Flanke aufweist, wobei der kopfseitige Flankenwinkel größer als der spitzenseitige Flankenwinkel ist und der spitzenseitige Flankenwinkel im Schaftbereich und im Spitzenbereich etwa gleich bleibt, während der kopfseitige Flankenwinkel im Spitzenbereich größer als im Schaftbereich ist. Der Flankenwinkel ist der Winkel, den die entsprechende Flanke mit einer Radialebene zur Schraubenmittelachse einschließt. Die Erfindung geht einen im Vergleich zur DE 29 811 536 U entgegengesetzten Weg, indem nämlich das Schraubengewinde im Bereich der Schraubenspitze asymmetrischer ist als im Bereich des Schaftes. Die Herstellung ist darüber hinaus relativ einfach, denn der spitzenseitige Flankenwinkel bleibt in etwa über den gesamten Gewindebereich gleich. Der kopfseitige Flankenwinkel wird jedoch im Spitzenbereich größer als im Flankenbereich, das bedeutet, im Spitzenbereich steht für den bei der Herstellung der Schraube verdrängten Werkstoff mehr Platz zur Verfügung, was die Herstellung weniger aufwendig macht, um die erforderlichen Toleranzen einzuhalten. Beim Eindrehen in einen Dübel sorgt die Flankengeometrie für eine größere Verdrängung und somit für verbesserte Auszugswerte.

Der kopfseitige Flankenwinkel sollte, wie sich bei Versuchen herausgestellt hat, im Spitzenbereich wenigstens um den Faktor 1,4 größer als im Schaftbereich sein.

Gemäß der bevorzugten Ausführungsform beträgt der kopfseitige Flankenwinkel im Spitzenbereich etwa 40° und im Schaftbereich etwa 25°, wobei der spitzenseitige Flankenwinkel vorzugsweise 15° beträgt.

Bei der Herstellung von Schrauben lassen sich die Flankenwinkel nicht auf ein Grad genau herstellen, ebensowenig läßt sich ein Flankenwinkel über die gesamte Gewindelänge gleichbleibend herstellen. Deshalb sind Winkelangaben in diesem Zusammenhang automatisch mit einer Toleranz von ± 3 Grad zu lesen. Auch die Angabe, daß ein Winkel in etwa gleich bleibt, bedeutet, daß dieser im Bereich von ± 3 Grad schwanken darf.

Das Gewinde sollte in seinem kopfnahen Abschnitt nach außen scharfkantig zulaufen, um den Eindrehwiderstand gering zu halten. Im spitzennahen Abschnitt des Gewindes sorgt ein weniger scharfkantiges oder stumpfes Zulaufen der Flanken für ein weniger starkes Einschneiden in den Dübel, für eine bessere Verpressung und für höhere Auszugswerte.

Fräsrippen zwischen Gewinde und Kopf verhindern ein Klemmen des Schraubenschafts beim Eindrehen der Schraube in Holz.

Die Fräsrippen sind gemäß der bevorzugten Ausführungsform in einem Schaftbereich angeordnet, der einen größeren Außendurchmesser besitzt als der mit dem Gewinde versehene Schaftbereich. Die beiden Schaftbereiche grenzen über einen Absatz aneinander an.

Sehr gute Eindreheigenschaften hat die erfindungsgemäße Holz- und Kunststoffschraube darüber hinaus, wenn sie ein bestimmtes Verhältnis von Gewindesteigung zu Gewindekerndurchmesser im Schaftbereich besitzt. Dieses Verhältnis sollte im Bereich von 1,3 bis 1,5, vorzugsweise 1,3 bis 1,45 liegen.

Weitere Merkmale und Vorteile der Erfindung ergeben sich aus der nachfolgenden Beschreibung und aus der nachfolgenden Zeichnung, auf die Bezug genommen wird.

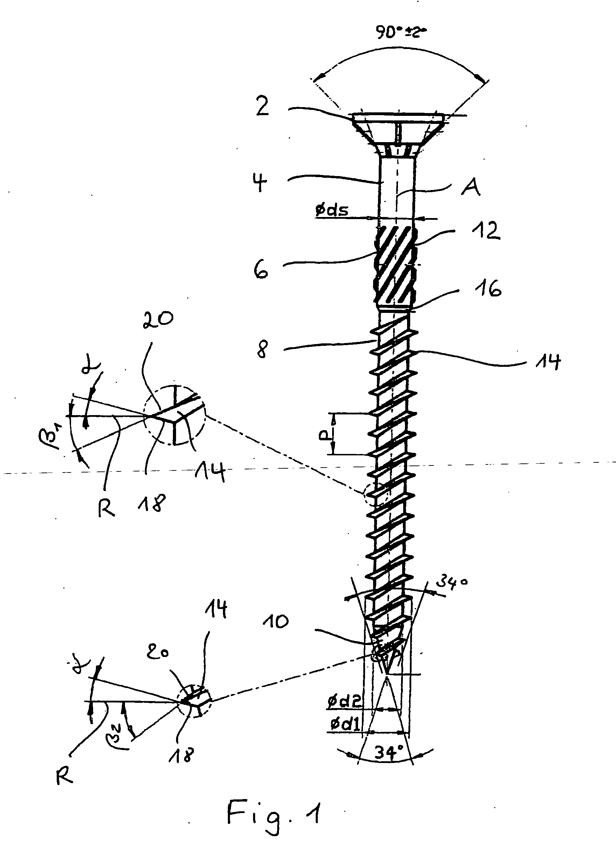

Figur 1 zeigt eine vergrößerte Ansicht der erfindungsgemäßen Holz- und Kunststoffschraube mit zwei vergrößerten Detailansichten des Gewindes im Bereich des Schaftes und im Bereich der Spitze.

Die in Figur 1 gezeigte Schraube zum Eindrehen in Massivholz, Spanplatten, Dübel etc. besteht aus Metall und hat einen Kopf 2, einen im wesentlichen in drei Bereiche 4, 6 und 8 zu unterteilenden Schaft und einen Spitzenbereich 10. Der Bereich 4 des Schaftes ist zylindrisch ausgeführt und besitzt weder Gewinde noch sonstige Vorsprünge. Der sich daran anschließende Schaftbereich 6 ist mit Fräsrippen 12 versehen. Die Schaftbereiche 4 und 6 haben den gleichen Durchmesser dₛ (im Bereich 6 ist dieser Durchmesser dₛ der Kerndurchmesser). Vom Bereich 8 an beginnt ein sich bis in den Spitzenbereich 10 hineinerstreckendes doppelgängiges Gewinde 14 mit einer Steigung p. Der Kerndurchmesser d₂ ist dabei kleiner als der Durchmesser dₛ, so daß die Bereiche 8 und 6 durch einen Absatz 16 voneinander getrennt sind.

Das Gewinde 14 hat eine spitzenseitige, untere Flanke 18 und eine kopfseitige, obere Flanke 20. Der spitzenseitige Flankenwinkel α ist im Schaftbereich 8 etwa gleich groß wie im Spitzenbereich 10 und beträgt etwa 15°. Der Flankenwinkel α wird zu einer Radialebene R gemessen, einer Ebene senkrecht zur Mittel- oder Längsachse A der Schraube.

Der kopfseitige Flankenwinkel ändert sich über die Längserstreckung des Gewindes. Im Schaftbereich 8 beträgt der kopfseitige Flankenwinkel β₁ etwa 25°. Ab dem konisch zulaufenden Spitzenbereich 10 ändert sich der Flankenwinkel. Im Spitzenbereich 10 beträgt der Flankenwinkel β₂ dann etwa 40°, ist also um wenigstens den Faktor 1,4 größer als im Schaftbereich.

Wie bereits erläutert, ist das Gewinde 14 ein doppelgängiges Gewinde. Beide Gewindegänge erstrecken sich bis fast an die Spitze der Schraube und beginnen in axialer Richtung gesehen bis auf übliche Herstellungstoleranzen in etwa auf gleicher axialer Höhe. Dies ist in Figur 1 zu sehen, bei der die linke untere vergrößerte Ansicht etwa den Beginn des ersten Ganges zeigt, wobei gegenüberliegend, um 180° versetzt, der zweite Gang auf gleicher axialer Höhe beginnt. Durch das doppelgängige Gewinde, das bis in die Spitze ragt, ergibt sich ein schnelles, gutes Fassen der Schraube in Holz und im Dübel sowie ein schnelles Eindrehen der Schraube. Das doppelgängige Gewinde setzt sich bis zum kopfseitigen Gewindeende durch.

Eine weitere wichtige Eigenschaft der dargestellten Schraube ist der unterschiedlich scharfkantige Auslauf der Flanke. Im Bereich des kopfnahen Gewindeabschnitts, der in etwa den oberen zwei Dritteln bis drei Vierteln des Gewindes entspricht, laufen die Flanken 18, 20 nach außen scharfkantig zu. Im unteren Drittel oder Viertel, also im spitzennahen Abschnitt des Gewindes hingegen, laufen die Flanken 18, 20 weniger scharfkantig, vorzugsweise sogar etwas stumpf zu, was nicht zwingend etwas mit dem Flankenwinkel selbst zu tun hat, sondern mit der Ausformung des Gewindes. Die zum Teil vielleicht sogar abgerundet oder gebrochen wirkende Flankenspitze sorgt für ein weniger starkes Einschneiden der Gewinde in den Dübel, für eine bessere Verpressung des Dübels und für höhere Auszugswerte. Der höhere Flankenwinkel β₂ im Bereich der Spitze unterstützt dies zudem.

Beachtenswert ist ferner auch der Spitzenwinkel, der in Figur 1 mit 34° angegeben ist. Dieser dargestellte Spitzenwinkel von 34° ist auf den Kerndurchmesser des Gewindes im Bereich der Spitze bezogen. Der Spitzenwinkel bleibt aber bei der dargestellten Schraube gleich, wenn man Tangenten an das kopfseitige Gewindeende anlegt (siehe oberen Winkel von 34° in Figur 1).

Das Verhältnis der Gewindesteigung p zu dem Gewindekerndurchmesser d₂ (d₁ ist der Kopfdurchmesser) im Schaftbereich 8 sollte im Bereich von 1,3 bis 1,5 liegen, damit sich eine sehr gute Auszugsfestigkeit bei geringem Eindrehmoment ergibt.

## Patentansprüche

1. Holz- und Kunststoffschraube, mit einem Kopf (2), einem im wesentlichen zylindrischen Schaft (4, 6, 8), einer Spitze und einem sich über den Schaft (8) bis in den Spitzenbereich (10) erstreckenden Gewinde (14), das eine spitzenseitige und eine kopfseitige Flanke (18, 20) aufweist, wobei der kopfseitige Flankenwinkel (β₁, β₂) größer als der spitzenseitige Flankenwinkel (α) ist und der spitzenseitige Flankenwinkel (α) im Schaftbereich (8) und im Spitzenbereich (10) etwa gleich bleibt, **dadurch gekennzeichnet dass** der kopseitige Flankenwinkel (β₁, β₂) im Spitzenbereich (10) größer als im Schaftbereich (8) ist.

2. Holz- und Kunststoffschraube nach Anspruch 1, **dadurch gekennzeichnet, daß** der kopfseitige Flankenwinkel (β₂) im Spitzenbereich (10) um wenigstens den Faktor 1,4 größer als im Schaftbereich (8) ist.

3. Holz- und Kunststoffschraube nach Anspruch 1 oder 2, **dadurch gekennzeichnet, daß** der kopfseitige Flankenwinkel (β₂) im Spitzenbereich (10) etwa 40° beträgt.

4. Holz-und Kunststoffschraube nach einem der vorhergehenden Ansprüche, **dadurch gekennzeichnet, daß** der kopfseitige Flankenwinkel (β₁) im Schaftbereich (8) etwa 25° beträgt.

5. Holz- und Kunststoffschraube nach einem der vorhergehenden Ansprüche, **dadurch gekennzeichnet, daß** das Gewinde (14) in einem kopfnahen Abschnitt nach außen scharfkantig zuläuft.

6. Holz- und Kunststoffschraube nach einem der vorhergehenden Ansprüche, **dadurch gekennzeichnet, daß** das Gewinde (14) in einem spitzennahen Abschnitt stumpf oder weniger scharfkantig als im kopfnahen Abschnitt zuläuft.

7. Holz- und Kunststoffschraube nach einem der vorhergehenden Ansprüche, **dadurch gekennzeichnet, daß** zwischen Gewinde (14) und Kopf (2) ein mit Fräsrippen (12) ausgebildeter Schaftbereich (6) vorhanden ist.

8. Holz- und Kunststoffschraube nach Anspruch 7, **dadurch gekennzeichnet, daß** der Schaftbereich (6) mit Fräsrippen (12) über einen Absatz (16) an den Schaftbereich (8) mit Gewinde (14) angrenzt.

9. Holz- und Kunststoffschraube nach einem der vorhergehenden Ansprüche, **dadurch gekennzeichnet, daß** das Gewinde (14) ein doppelgängiges Gewinde ist, bei dem beide Gänge bis in den Spitzenbereich (10) ragen und dort in axialer Richtung in etwa auf gleicher Höhe beginnen.

10. Holz- und Kunststoffschraube nach einem der vorhergehenden Ansprüche, **dadurch gekennzeichnet, daß** das Verhältnis von Gewindesteigung (p) zu Gewindekerndurchmesser (d₂) im Schaftbereich (8) im Bereich von 1,3 bis 1,5 liegt.

## Claims

1. A wood and plastic screw, having a head (2), an essentially cylindrical shank (4, 6, 8), a tip, and a thread (14) extending along the shank (8) as far as into the tip region (10), the thread comprising a tip-side and a head-side flank (18, 20), the head-side flank angle (β₁, β₂) being larger than the tip-side flank angle (α), and the tip-side flank angle (α) remaining approximately constant in the shank region (8) and in the tip region (10), **characterized in that** the head-side flank angle (β₁, β₂) in the tip region (10) is larger than that in the shank region (8).

2. The wood and plastic screw according to claim 1, **characterized in that** in the tip region (10), the head-side flank angle (β₂) is larger than in the shank region (8) by the factor of at least 1.4.

3. The wood and plastic screw according to claim 1 or 2, **characterized in that** the head-side flank angle (β₂) in the tip region (10) is approximately 40°.

4. The wood and plastic screw according to any of the preceding claims, **characterized in that** the head-side flank angle (β₁) in the shank region (8) is approximately 25°.

5. The wood and plastic screw according to any of the preceding claims, **characterized in that** in a portion near the head, the thread (14) tapers to the outside to a sharp edge.

6. The wood and plastic screw according to any of the preceding claims, **characterized in that** in a portion near the tip, the thread (14) tapers obtusely or to a less sharp edge than in the portion near the head.

7. The wood and plastic screw according to any of the preceding claims, **characterized in that** a shank region (6) formed with milling ribs (12) is present between the thread (14) and the head (2).

8. The wood and plastic screw according to claim 7, **characterized in that** the shank region (6) having the milling ribs (12) adjoins the shank region (8) having the thread (14) via a shoulder (16).

9. The wood and plastic screw according to any of the preceding claims, **characterized in that** the thread (14) is a two-start thread in which both starts project as far as into the tip region (10) and start here approximately at the same height with respect to an axial direction.

10. The wood and plastic screw according to any of the preceding claims, **characterized in that** the ratio of the thread pitch (p) to the thread core diameter (d₂) in the shank region (8) is in the range of from 1.3 to 1.5.

## Revendications

1. Vis à bois et pour plastique présentant une tête (2), une tige (4, 6, 8) sensiblement cylindrique, une pointe et un filetage (14) qui s'étend le long de la tige (8) jusque dans la zone de pointe (10) et présente un flanc du côté pointe et un flanc du côté tête (18, 20), l'angle de flanc (β₁, β₂) du côté tête étant supérieur à l'angle de flanc (α) du côté pointe, et l'angle de flanc (α) du côté pointe restant approximativement constant dans la zone de tige (8) et dans la zone de pointe (10), **caractérisée en ce que** dans la zone de pointe (10), l'angle de flanc (β₁, β₂) du côté tête est plus grand que dans la zone de tige (8).

2. Vis à bois et pour plastique selon la revendication 1, **caractérisée en ce que** dans la zone de pointe (10), l'angle de flanc (β₂) du côté tête est supérieur au moins du facteur 1,4 à celui dans la zone de tige (8).

3. Vis à bois et pour plastique selon la revendication 1 ou 2, **caractérisée en ce que** dans la zone de pointe (10), l'angle de flanc (β₂) du côté tête est d'environ 40°.

4. Vis à bois et pour plastique selon l'une des revendications précédentes, **caractérisée en ce que** dans la zone de tige (8), l'angle de flanc (β₁) du côté tête est d'environ 25°.

5. Vis à bois et pour plastique selon l'une des revendications précédentes, **caractérisée en ce que** dans un tronçon proche de la tête, le filetage (14) se termine vers l'extérieur en une arête vive.

6. Vis à bois et pour plastique selon l'une des revendications précédentes, **caractérisée en ce que** dans un tronçon proche de la pointe, le filetage (14) se termine de manière émoussée ou en une arête moins vive que dans le tronçon proche de la tête.

7. Vis à bois et pour plastique selon l'une des revendications précédentes, **caractérisée en ce qu'**une zone de tige (6) réalisée avec des nervures de fraisage (12) est présente entre le filetage (14) et la tête (2).

8. Vis à bois et pour plastique selon la revendication 7, **caractérisée en ce que** la zone de tige (6) présentant les nervures de fraisage (12) est adjacente à la zone de tige (8) présentant le filetage (14) par l'intermédiaire d'un talon (16).

9. Vis à bois et pour plastique selon l'une des revendications précédentes, **caractérisée en ce que** le filetage (14) est un filetage à deux filets, dans lequel les deux filets s'étendent jusque dans la zone de pointe (10) et commencent ici, en direction axiale, approximativement à la même hauteur.

10. Vis à bois et pour plastique selon l'une des revendications précédentes, **caractérisée en ce que** le rapport entre le pas de filetage (p) et le diamètre du noyau de filetage (d₂) dans la zone de tige (8) est dans la plage entre 1,3 et 1,5.
